(19) Europäisches Patentamt
European Patent Office
Office européen des brevets

(11) **EP 2 451 040 A1**

(12) **EUROPEAN PATENT APPLICATION**

(43) Date of publication:
**09.05.2012 Bulletin 2012/19**

(51) Int Cl.:
**H02J 3/18** (2006.01)

(21) Application number: **11186072.2**

(22) Date of filing: **21.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.11.2010 IT BO20100666**

(71) Applicant: **Raw Power S.r.l.**
**42124 Reggio Emilia (IT)**

(72) Inventor: **Crinto, Andrea Stefano**
**43039 SALSOMAGGIORE TERME (PARMA) (IT)**

(74) Representative: **Gotra, Stefano**
**BUGNION S.p.A.**
**Largo Michele Novaro, 1/A**
**43121 Parma (IT)**

(54) **Device for eliminating a dc current component circulating in a monophasic electrical grid**

(57) Device for eliminating a DC current component circulating in an electrical grid where the device (4) comprises a reactor (5), which can be connected to a given point (3) of the electrical grid (1) and is designed to operate at the knee of its magnetic characteristic curve, so as to obtain a magnetic saturation of the reactor (5) in presence of the DC current component, a first current sensor (6) for measuring the reactor current (IR), a power converter (7) coupled to the same point (3) of the electrical grid (1) by means of a low-pass filter (8), a second current sensor (10) for measuring the output current (IJ) of the power converter (7) and a processing and control device (13-17, 20-22) for determining, as a function of the measured reactor current (IR), a converter current set point (IJSET) and for controlling the power converter (7) in such a way that the measured converter current (IJ) becomes substantially equal to said converter current set point (IJSET).

FIG.1

**Description**

The present invention relates to a device for eliminating a DC current component circulating in a monophasic electrical grid.

In particular, the present invention finds advantageous but not exclusive application in any electrical system which comprises at least one DC-AC electronic converter and at least one non-linear electric load connected simultaneously to a monophasic electrical grid, the following description explicitly referring to the current application but in no way limiting the general applicability of the invention.

It is well known that when electronic devices such as personal computers, DC-AC electronic converters for producing electrical energy from renewable sources (e.g. photovoltaic or windpower), electrical drives for motors, etc., are connected to the national electrical energy grid they insert non-linear distortions into the electrical current circulating in the grid, these distortions degrading the quality of the electrical power used by other loads connected to the same electrical grid. In order to limit as far as possible the entity of distortions introduced into the electrical grid, laws and regulations have been implemented which oblige manufacturers of electronic devices to observe special requirements. However, although commercially available electronic devices may individually respect such laws and regulations, the cumulative effect of numerous electrical devices being connected to the electrical grid and operating at the same time does in any case cause such distortions preventing the efficient operation of other equipment connected to the grid.

One of the non-linear distortions inserted into the electrical grid is the DC current component superimposed on the alternating current distributed by the electrical grid. The DC current component is damaging for transformers and in particular for the high-power transformers used by the national electricity grid operating authority or for sensitive electrical loads. In general, transformers are designed to absorb a preset amount of current from the electrical grid even during loadless operation, that is, even in the absence of an electrical load. The current absorbed during loadless operation is necessary to create the magnetic flux inside the transformer. The maximum magnetic flux of a transformer depends on the ferromagnetic material used in the making of some of its components. Generally speaking, in order to optimise costs transformers are designed to operate with a flux which is close to the maximum flux permitted by the ferromagnetic material used, the maximum flux being given by the product of the maximum acceptable magnetic induction and the section of the ferromagnetic core. The DC current component saturates the ferromagnetic material and as a consequence produces a distortion of the transformer magnetizing current and the load current. The saturation of the ferromagnetic material, taking place only during a half-cycle of the grid voltage half-cycle saturation), produces a series of damaging effects on the transformer, among which an increase in absorbed reactive power, an increase in dissipated power, a distortion of the current circulating on the transformer windings and a consequent overheating of the transformer.

In order to prevent these damaging effects on the transformers of the national electricity grid or on other sensitive electrical loads, it is necessary to prevent the injection or absorption of DC current components in the electrical grid.

There are solutions which use analog circuits to assess the imbalance between the positive and negative half-waves of the electrical grid voltage, or solutions which use digital systems based on a counter. However, these solutions are practically always employed together with a DC-AC converter with the aim to eliminate the residual DC current component exiting from said converter, and have proven to be complex, imprecise and unreliable in achieving their aim to eliminate any DC current component circulating in the electrical grid.

The object of the present invention is to provide a device for eliminating a DC current component circulating in a monophasic electrical grid which does not have the shortcomings described above and which is at the same time easy and cost-effective to produce.

In accordance with the present invention there are provided a device for eliminating a DC current component circulating in an electrical grid and a use of a device for eliminating a DC current component circulating in an electrical grid as defined in the accompanying claims.

As an aid to better understanding the present invention, a preferred and non-limiting embodiment will now be described with reference to the annexed drawings, in which:

- Figure 1 illustrates a block diagram of a device for eliminating a DC current component circulating in a monophasic electrical grid, according to the present invention;
- Figure 2 illustrates the waveforms of some electrical values related to part of the device shown in Figure 1;
- Figure 3 illustrates a detailed view of a further part of the device shown in Figure 1;
- Figure 4 illustrates a detailed view of the connections of some parts of the device shown in Figure 1.

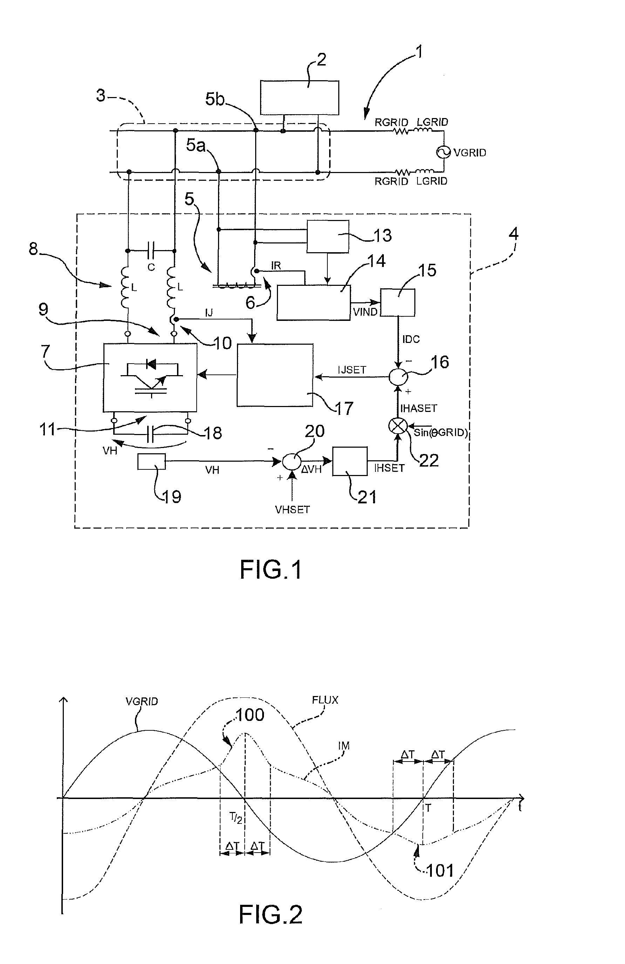

In Figure 1, the numeral 1 indicates a monophasic electrical grid for distributing alternating current electrical energy, where VGRID is the grid alternating voltage and RGRID and LGRID are the parasitic resistance and inductance distributed along the electrical grid, the numeral 2 indicates a group of electrical power sources and/or electrical loads connected to the electrical grid 1 and the numeral 4 indicates a device for eliminating a DC current component circulating in the electrical grid 1, the device 4 being obtained according to the present invention. The set of sources and loads 2 is connected to the electrical grid 1 at a common coupling point 3, that is, at the interface point between the electrical sources and the electrical loads. The set of sources and loads 2 comprises sources of electrical energy based on renewable energy sources. Thus, these electrical sources tipically comprise a DC-AC power converter connected to the electrical grid at the common coupling point. In use, these electrical sources insert into the electrical grid 1 a DC current component which circulates in the electrical grid 1, thereby causing a continuous component voltage drop at the common coupling point 3 due to the presence of the parasitic resistance RGRID.

The device 4 comprises a reactor 5 which is to be connected in parallel to the electrical grid 1 at the common coupling point 3 and is designed to operate, when it is connected to the electrical grid 1, at the "knee" (i.e. at the change of slope) of its magnetic characteristic curve in such a way as to obtain a significant and asymmetrical magnetic saturation of the reactor 5 when the DC current component is circulating in the grid 1. In particular, the reactor 5 comprises a toroidal magnetic core and a single winding wound around the magnetic core and connected with its own terminals to the electrical grid 1 at the common coupling point 3. The reactor 5 is configured as a low-power toroidal transformer having one primary winding only so that during operation of the reactor 5 the magnetic core works close to the knee of its magnetic characteristic curve and is therefore magnetically saturated when a DC current component is circulating in the electrical grid 1. The device 4 comprises a current sensor 6 for measuring the reactor current IR which circulates in the winding of the reactor 5. The current sensor 6 can consist of, for example, a current or amperometric transformer coupled to a point of the winding of the reactor 5. The current transformer ensures adequate galvanic isolation during measurement and provides a measurement which does not have any intrinsic offset problems. Given that the reactor 5 has a single winding only, the measured reactor current IR coincides with the magnetizing current of the reactor 5, whose waveform is strongly linked to the value of the voltage DC component at the common coupling point 3.

In Figure 2, VGRID indicates the waveform of the grid voltage (alternating component) present between the terminals 5a and 5b, FLUX indicates the waveform of the magnetic flux of the toroidal core of the reactor 5 and IM indicates the waveform of the magnetizing current. For the sake of clarity, the three wave forms are drawn with different types of line. In use, the DC voltage component superimposed on the grid voltage VGRID causes a strong saturation of the magnetic core of the reactor 5, resulting in a considerable distortion in the waveform of the magnetizing current IM close to the zero-crossings of the grid voltage VGRID. The distortion of the magnetizing current IM consists of a positive bump 100 and a negative bump 101 respectively at the half-cycle and full cycle of the grid voltage VGRID. The example in Figure 2 refers to a positive DC voltage component which generates a magnetizing current IM with a positive bump 100 which is greater than the negative bump 101. As the amplitude of the DC current component increases so does the difference in extension between the positive bump 100 and the negative bump 101. The DC component therefore generates a DC voltage component which in turn generates a distortion in the waveform of the magnetizing current IM which is then detectable by the current sensor 6.

With reference to Figure 1, the device 4 comprises a power converter 7, a low pass filter 8 for coupling the output 9 of the power converter 8 to the electrical grid 1 at the common coupling point 3 and a further current sensor 10 to measure the converter current IJ which circulates between the output 9 of the power converter 7 and the electrical grid 1. The low pass filter 8 is dimensioned to have a reduced oscillation ("ripple") on the current which the power converter 7 injects into the electrical grid 1.

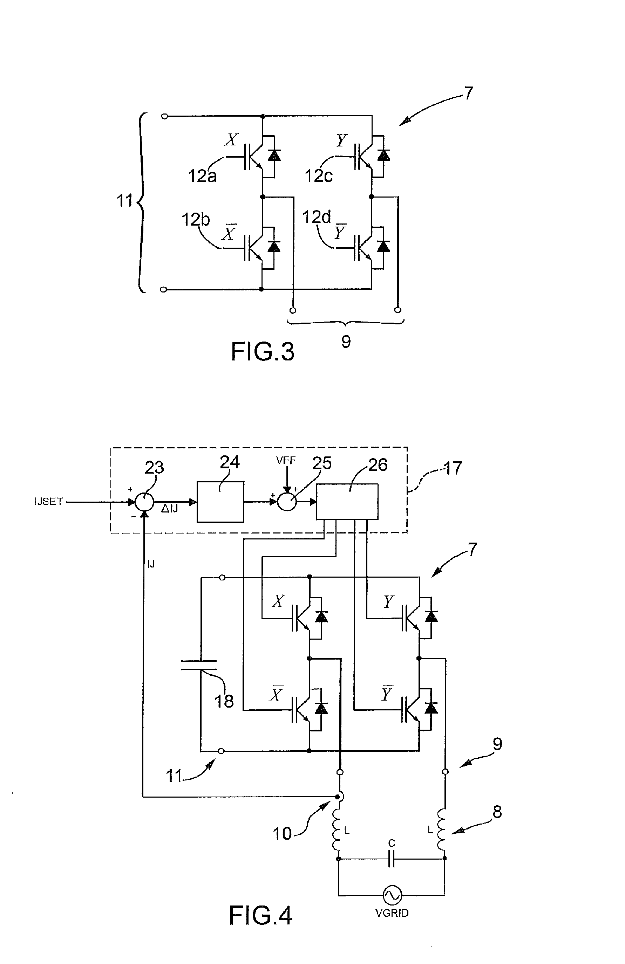

The power converter 7 consists, for example, of a transistor full-bridge of the known type whose structure is shown in Figure 3. With reference to Figure 3, the output of the converter 7 is indicated by the numeral 9, the power supply input of the converter 6 is indicated by the numeral 11 and the control inputs of the converter 7 are indicated by 12a, 12b, 12c and 12d respectively. The low pass filter 8 is a common LC filter. The current sensor 10 is a current or amperometric transformer and is connected between the output 9 of the power converter 7 and the input of the low pass filter 8.

In an alternative embodiment of the invention (not illustrated), the current sensor 10 is connected between the output of the low pass filter 8 and the common coupling point 3.

With reference to Figure 1, the device 4 comprises a phase-locked loop 13 which is connected to the common coupling point 3 in order to receive the grid voltage VGRID and to supply instants of zero-crossing of the grid voltage VGRID. The device 4 also comprises a DC component detector 14 which is configured to calculate, during each cycle T of the grid voltage, a positive saturation index SIP and a negative saturation index SIN by integrating the measured current IR in the neighbourhood of the zero-crossing instants respectively of the half-period and of the period of the grid voltage VGRID. The device 4 is also configured to calculate a voltage indicator VIND as the difference between the two saturation indexes SIP and SIN. The voltage indicator VIND is an indicator of the DC voltage component at the common coupling point 3. In particular, the saturation indexes SIP and SIN are calculated in accordance with the following formulae:

$$SIP = \int_{T/2-\Delta T}^{T/2+\Delta T} |IR(t)| dt \quad ; \quad SIN = \int_{T-\Delta T}^{T+\Delta T} |IR(t)| dt .$$

In these formulae, T is the cycle of the grid voltage VGRID and $\Delta T$ is half of the neighbourhood centred on the zero-crossing instants. The voltage indicator VIND is therefore calculated as follows:

$$VIND = SIP - SIN .$$

The device 4 comprises a current regulator constituted by a regulator of the proportional-integral type (regulator PI) 15 which receives the voltage indicator VIND and provides a corresponding IDC estimate of the DC current component circulating in the electrical grid 1. The IDC estimated current, with the sign changed, corresponds to the current that the power converter 7 must inject in or absorb from the electrical grid in order to compensate for or eliminate the DC current component that circulates in the electrical grid 1.

Thus, the DC current component which circulates in the electrical grid 1 is measured indirectly, that is, by measurement of the DC component of the voltage at the common coupling point 3, which in turn is measured indirectly by measuring the reactor current. In this way it is possible to detect voltage DC current components of some tens of mV superimposed on a grid voltage VGRID having a peak-to-peak amplitude in the order of 600 V. Furthermore, the measurement strategy described above is very precise and does not have any problems of offset in the measuring chain of the current circulating in the reactor 5.

The device 4 comprises an algebraic adder 16 for calculating a converter current reference ("set point") IJSET as the sum of multiple contributions, the first of which is the estimated current IDC with an inverted sign. The device 4 also comprises a current controller 17 which receives the measured converter current IJ and the converter current set point IJSET and controls the power converter 7 in such a way that the measured converter current IJ becomes substantially equal to the current set point IJSET.

The device 4 comprises at least one capacitor 18 connected to the supply input 11 of the power converter 7, a voltage measurer 19 for measuring the supply voltage VH at the terminals of the capacitor 18, and a subtractor 20 for measuring a voltage error $\Delta VH$ as the difference between the measured supply voltage VH and a supply voltage set point VHSET. The voltage measurer 19 is constituted, for example, of a resistive divider or a linear optoisolator. The device 4 also comprises a further current regulator constituted by a proportional-integral regulator (regulator PI) 21, which receives the voltage error $\Delta VH$ and provides a corresponding supply current set point IHSET for the power converter 7. The device 4 also comprises a multiplier 22 whose function is to multiply the supply current set point IHSET by *sin ($\theta$GRID),* where $\theta$GRID is the phase angle of the grid voltage VGRID at the common coupling point 3, in order to obtain an active supply current set point IHASET. The phase angle $\theta$GRID is supplied by the phase-locked loop 13.

The active supply current set point IHASET represents the amount of active current that the power converter 7 must absorb from the electrical grid 1 to obtain an independent power supply and to compensate for its own electrical power losses. In other words, the purpose of the PI regulator 21 is to maintain at a constant level the supply voltage VH at the capacitor 18 terminals by absorbing from the electrical grid 1 a sinusoidal current component with a unitary power factor.

The active supply current set point IHASET is a second contribution input to the algebraic adder 16. Thus, the injected current set point IJSET is calculated as the algebraic sum of a first current component (-IDC) to be injected into, or absorbed by the electrical grid in order to compensate (or eliminate) the DC current component circulating in the electrical grid 1 and a second current component (+IHASET) to be absorbed from the electrical grid 1 for the independent supply of the device 4.

With reference to Figure 4, the current controller 17 comprises, for example, a subtractor 23 for determining a current error $\Delta IJ$ as the difference between the measured converter current IJ and the converter current set point IJSET, a proportional-integral regulator 24 which receives the current signal $\Delta IJ$, an adder 25 connected to the output of the PI regulator 24 used to introduce an open-loop (VFF) contribution and a PWM generator 26, that is, a three-level single-pole generator connected between the output of the adder 25 and the control inputs 12a to 12d of the power converter 7.

The blocks indicated by 13 to 17 and 20 to 22 in Figure 1 perform the processing function of the measured reactor current IR and the measured supply voltage VH in order to determine a converter current set point IJSET and are preferably implemented by a DSP (Digital Signal Processor) configured using a related software. As an alternative, the blocks 13 to 17 and 20 to 22 can be implemented using dedicated hardware. In particular, the blocks 15, 16, 21 and 22 perform the function of regulating the converter current set point IJSET as a function of the quantities calculated by blocks 13-14 and 20.

In a further embodiment of the invention not shown here, the voltage indicator VID is calculated as:

$$VIND = SIN - SIP \; ,$$

and therefore the algebraic adder 16 sums the supply active current IHASET with the estimated current IDC without inverting the sign of the estimated current IDC.

The main advantage of the device 4 described above is that it is connectable to any point of the electrical grid 1, and in particular to a common coupling point 3 of any type of electrical load or AC-DC or DC-AC electronic converters, in order to compensate for, or eliminate in a precise way a DC current component circulating in the electrical grid 1. Furthermore, the device 4 is of the stand-alone type, that is, it does not need an external power supply source outside the electrical grid 1 because it is able to power itself independently by absorbing the necessary quantity of active electrical power.

**Claims**

1. Device for eliminating a DC current component circulating in an electrical grid; the device (4) being **characterised in that** it comprises an reactor (5), which has to be connected in parallel to the electrical grid (1) at a given point (3) of the latter and is designed to operate, when it is connected to the electrical grid (1), in correspondence to the knee of its magnetic characteristic, so as to obtain a magnetic saturation of said reactor (5) in presence of said DC current component, a first current sensor (6) for measuring the reactor current (IR), a power converter (7), a low-pass filter (8) for coupling the output (9) of the power converter (7) to the electrical grid (1) at said given point (3), a second current sensor (10) for measuring a converter current (IJ) circulating between the output (9) of the power converter (7) and said given point (3) of the electrical grid (1), first processing means (13-16, 20-22) for determining, as a function of at least the measured reactor current (IR), a converter current set point (IJSET), and a current controller (17) for controlling the power converter (7) in such a way that the measured converter current (IJ) becomes substantially equal to said converter current set point (IJSET).

2. Device according to claim 1, wherein said first processing means (13-16, 20-22) comprise second processing means (13, 14) for determining, as a function of said measured reactor current (IR), an indicator (VIND) of the DC voltage component at said given point (3) of the electrical grid (1), and current regulating means (15, 16, 21, 22) configured to regulate said converter current set point (IJSET) as a function of said DC voltage component indicator (VIND).

3. Device according to claim 2, wherein said current regulating means (15, 16, 21, 22) comprise a first regulator of the proportional-integral type (15), which receives said DC voltage component indicator (VIND) and provides a corresponding estimate (IDC) of said DC current component, and third processing means (16) for determining said converter current set point (IJSET) as a function of said DC current component estimate (IDC).

4. Device according to claim 2 or 3, wherein said second processing means (13, 14) comprise a phase-locked loop (13), which is connected to said given point (3) of the electrical grid (1) in order to receive the grid voltage (VGRID) and to provide instants of zero-crossing of the grid voltage (IGRID), and DC component detecting means (14), which are configured to calculate, during each cycle of the grid voltage (VGRID), a positive saturation index (SIP) and a negative saturation index (SIN) by integrating said measured reactor current (IR) in a neighbourhood of the zero-crossing instants of the half-period and, respectively, of the period of the grid voltage (VGRID) and to calculate said DC voltage component indicator (VIND) as a difference between the two saturation indexes (SIP, SIN).

5. Device according to any of the claims from 2 to 4, and comprising capacitor means (18) connected to the supply input (11) of said power converter (7) and voltage measuring means (19) for measuring a supply voltage (VH) at the ends of said capacitor means (18); said first processing means (13-16, 20-22) comprising fourth processing means (20) for determining a voltage error ($\Delta$VH) as a function of the measured supply voltage (VH) and of a supply voltage set point (VHSET); said current regulating means (15, 16, 21, 22) being configured to determine said converter current set point (IJSET) as a function of said voltage error ($\Delta$VH).

6. Device according to claim 5, wherein said current regulating means (15, 16, 21, 22) comprise a second regulator of the proportional-integral type (21), which receives said voltage error signal (ΔVH) and provides a corresponding supply current set point (IHSET) for said power converter (7), and fifth processing means (16, 22) for determining said converter current set point (IJSET) as a function of said supply current set point (IHSET).

**7.** Device according to claims 3 and 6, wherein said second processing means (13, 14) comprise a phase-locked loop (13), which is connected to said given point (3) of the electrical grid (1) in order to receive the grid voltage (VGRID) and to provide phase angle (θGRID) of the grid voltage (VGRID) in said given Point (3); said fifth processing means (16, 22) comprising sixth processing means (22), which are suited to determine an active supply current set point (IHASET) as a function of said supply current set point (IHSET) and of said phase angle (θGRID), and said third processing means, which consist of an algebraic adder (16) for calculating said converter current set point (IJSET) as an algebraic addition of contributions, a first contribution being function of said DC current component estimate (IDC) and a second contribution being said active supply current set point (IHASET).

**8.** Device according to any of the previous claims, wherein said second current sensor (10) is arranged between the output (9) of said power converter (7) and said low-pass filter (8).

**9.** Device according to any of the previous claims, wherein said current controller (17) comprises seventh processing means (23) for determining a current error (ΔIH) as a function of said measured reactor current (IR) and of said converter current set point (IJSET), a third regulator of the proportional-integral type (24) connected to said seventh processing means (23) for receiving said current error (ΔIH), and a PWM generator (26) connected between said third proportional-integral regulator (24) and control inputs (12a-12d) of said power converter (7).

**10.** Use of a device for eliminating a DC current component circulating in an electrical grid, **characterised in that** the device (4) is of the type claimed in any of the previous claims and **in that** said reactor (5) is connected in parallel to the electrical grid (3) at a common coupling point (3) of a set of electrical sources and/or electrical loads (2).

FIG.1

FIG.2

FIG.3

FIG.4

Europäisches
Patentamt

European
Patent Office

Office européen
des brevets

**EUROPEAN SEARCH REPORT**

Application Number

EP 11 18 6072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2008 054366 A (OMRON TATEISI ELECTRONICS CO) 6 March 2008 (2008-03-06) | 1 | INV. H02J3/18 |
| A | * paragraphs [0001], [0026] - [0029]; figure 1 * | 2-10 | |
| Y | US 4 647 837 A (STEMMLER HERBERT [CH]) 3 March 1987 (1987-03-03) | 1 | |
| A | * column 4; figures 1,7 * | 2-10 | |
| Y | EP 0 551 683 A1 (ELECTRIC POWER RES INST [US]) 21 July 1993 (1993-07-21) | 1 | |
| A | * the whole document * | 2-10 | |
| A | US 4 434 376 A (HINGORANI NARAIN G [US]) 28 February 1984 (1984-02-28) * columns 1,5 * * figures 1,2 * | 1 | |
| A | US 2004/090212 A1 (WU CHIN-CHANG [TW] ET AL) 13 May 2004 (2004-05-13) * abstract * * figures 4,6 * | 1 | |

TECHNICAL FIELDS
SEARCHED (IPC)

H02J

The present search report has been drawn up for all claims

| Place of search | Date of completion of the search | Examiner |
|---|---|---|
| Munich | 1 December 2011 | Krasser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 18 6072

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2011

| Patent document cited in search report | | Publication date | Patent family member(s) | | Publication date |
|---|---|---|---|---|---|
| JP 2008054366 | A | 06-03-2008 | JP 4552913 B2 | | 29-09-2010 |
| | | | JP 2008054366 A | | 06-03-2008 |
| US 4647837 | A | 03-03-1987 | AU 575589 B2 | | 04-08-1988 |
| | | | AU 3352084 A | | 18-04-1985 |
| | | | CA 1230643 A1 | | 22-12-1987 |
| | | | DE 3472509 D1 | | 04-08-1988 |
| | | | EP 0144556 A1 | | 19-06-1985 |
| | | | IN 161960 A1 | | 05-03-1988 |
| | | | JP 60098830 A | | 01-06-1985 |
| | | | US 4647837 A | | 03-03-1987 |
| EP 0551683 | A1 | 21-07-1993 | EP 0551683 A1 | | 21-07-1993 |
| | | | US 5121048 A | | 09-06-1992 |
| US 4434376 | A | 28-02-1984 | NONE | | |
| US 2004090212 | A1 | 13-05-2004 | TW 588231 B | | 21-05-2004 |
| | | | US 2004090212 A1 | | 13-05-2004 |

For more details about this annex : see Official Journal of the European Patent Office, No. 12/82